# EUROPÄISCHE PATENTSCHRIFT

(11) **EP 0 857 893 B1**
(45) Veröffentlichungstag und Bekanntmachung des Hinweises auf die Patenterteilung: **25.04.2001**
(21) Anmeldenummer: 98101717.1
(22) Anmeldetag: 02.02.1998
(51) Int. Cl.: F16H 57/04

(54) **Entlüftungseinrichtung eines Getriebes mit integriertem Differential**
Venting device for a transmission with integrated differential gearing
Dispositif d'aération pour une transmission à engrenage différentiel intégré

(30) Priorität: 06.02.1997 DE 19704500
(43) Veröffentlichungstag der Anmeldung: 12.08.1998
(73) Patentinhaber: ZF FRIEDRICHSHAFEN Aktiengesellschaft, 88038 Friedrichshafen (DE)
(72) Erfinder: Renk, Matthias, 88212 Ravensburg (DE); Beigang, Lothar, 88149 Nonnenhorn (DE)

(56) Entgegenhaltungen:
- EP-A- 0 067 639
- DE-C- 19 704 500
- US-A- 5 540 300
- PATENT ABSTRACTS OF JAPAN vol. 008, no. 100 (M-295), 11.Mai 1984 & JP 59 013171 A (TOYOTA JIDOSHA KOGYO KK), 23.Januar 1984,
- HöHN,NOWATSCHIN: "Der Antriebsstrang des AUDI V8", ATZ, , , Band 91, Nr. 10, Seiten 582 - 587

## Beschreibung

Die Erfindung betrifft eine Entlüftungseinrichtung für ein Getriebe mit integriertem Differential nach der im Oberbegriff des Anspruches 1 näher definierten Art.

Getriebe mit einem integrierten Differential sind aus der Praxis und zahlreichen Veröffentlichungen bekannt. Zum Beispiel ist in der ATZ Automobiltechnische Zeitschrift 91 (1989) 10 ein Vierstufenautomatikgetriebe mit integriertem Differentialgetriebe beschrieben, welches mit einem separaten Ölhaushalt für das Getriebe zur Ölversorgung von Kupplungen, zur Schmierung, Kühlung, Druckansteuerung für Kupplung und Wandleransteuerung etc. und einem davon getrennten Ölhaushalt für das Differential, welches ein anderes Öl benötigt, arbeitet.

Damit sich während des Betriebes im Getriebegehäuse keine Überdrücke 'aufbauen, die sowohl Wellendichtungen gefährden als auch die Steuerung beeinflussen könnten, sind die Ölhaushalte des Getriebes mit der Atmosphäre verbunden. In der Praxis wird dazu in der Außenwand des Getriebegehäuses und des Differentialgehäuses eine Entlüftungseinrichtung vorgesehen, welche in einem möglichst geschützten und weit oben liegenden Platz untergebracht wird, damit kein Schleuderöl austreten kann. Darüber hinaus muß die Form des Entlüfters sicherstellen, daß durch seine Öffnung weder Schmutz noch Wasser in das Innere des Getriebes gelangen können.

Bezüglich der Entlüftungseinrichtung bei einem Differentialgehäuse ist es bekannt, die Entlüftungseinrichtung im Differentialradraum in einem beruhigten Raum zwischen Schub- und Zuglager der Seitenwelle anzuordnen, wobei diese Anordnung mit einem Ölstaublech, der einen Teil des Querschnitts des Differentialdeckels abdeckt, kombiniert sein kann. Die Entlüftungseinrichtung selbst ist dabei als Labyrinth ausgeführt.

Bei hohen Tellerradrehzahlen und hohen Temperaturen kann es bei der bekannten Positionierung des Entlüfters jedoch nachteilhafterweise dazu führen, daß das Öl verschäumt wird und im Öl befindliche Luft durch den Entlüfter entweicht, wobei ebenfalls Öl am Differentialentlüfter aus dem Differentialradraum austreten kann.

Auch bei einer langsamen Kaltanfahrt und anderen Anfahrzuständen kann die bekannte Positionierung des Differentialentlüfters zu einem Ölaustritt führen, da durch die Erwärmung des kalten Differentialöles, welches noch eine hohe Viskosität aufweist, ein Überdruck entsteht, welcher über den Entlüfter häufig nicht ohne Ölaustritt abgebaut werden kann.

Darüber hinaus weist die bekannte Entlüfterpositionierung den Nachteil auf, daß nur ein relativ kleines Ölvolumen in dem Differentialradraum realisierbar ist, was eine ungenügende Schmierung von Schub- und Zuglager, welche als Kegelrollenlager ausgebildet sein können, zur Folge haben kann.

Der vorliegenden Erfindung liegt daher die Aufgabe zugrunde, ein Getriebe mit integriertem Differential zu schaffen, welches eine Entlüftungseinrichtung aufweist, die unabhängig von Fahrzuständen und Temperaturen auch bei maximalem Differentialölstand sicherstellt, daß bei einem Druckausgleich des Differentialradraumes mit der Umgebung kein Öl austritt.

Erfindungsgemäß wird diese Aufgabe durch die im kennzeichnenden Teil des Anspruches 1 genannten Merkmale gelöst.

Durch die erfindungsgemäße Anordnung der Entlüftungseinrichtung an dem Differentialdeckel kann die Ölmenge vorteilhafterweise derart vergrößert werden, daß bei Getriebestillstand die unteren Lagerrollen unterhalb eines Ölpegels in einem Differentialradraum liegen. Somit ist selbst nach einem längerem Getriebestillstand bei Wiederinbetriebnahme des Differentiales eine sofortige Schmierung der Lager gewährleistet. Ebenfalls wird durch die erhöhte Ölmenge die thermo-oxidative Alterung des Öles vermindert.

Weiterhin ist von Vorteil, daß durch die erfindungsgemäße Anordnung eines Ölstaubleches an dem Differentialdekkel die Entlüftungseinrichtung vor Spritzöl abgeschirmt ist, wobei jedoch mehrere in dem Ölstaublech angeordnete Durchlaßöffnungen für eine gute Zirkulation des Differentialöles zwischen dem Differentialradraum und einem zwischen dem Ölstaublech und dem Differentialdeckel angeordneten Ölreservoirraum sorgen.

Vorteilhafte Ausgestaltungen und Weiterbildungen der Erfindung ergeben sich aus den Unteransprüchen und aus dem nachfolgend anhand der Zeichnung prinzipmäßig beschriebenen Ausführungsbeispiel.

Es zeigt:
- Fig. 1: eine Draufsicht auf einen Differentialdeckel mit einer Entlüftungseinrichtung und ein an dem Differentialdeckel angeordnetes Ölstaublech im Teilschnitt und
- Fig. 2: einen Längsschnitt durch einen Differentialdeckel gemäß Fig. 1 mit einer Entlüftungseinrichtung und einem an dem Differentialdeckel angeordneten Ölstaublech im eingebauten Zustand.

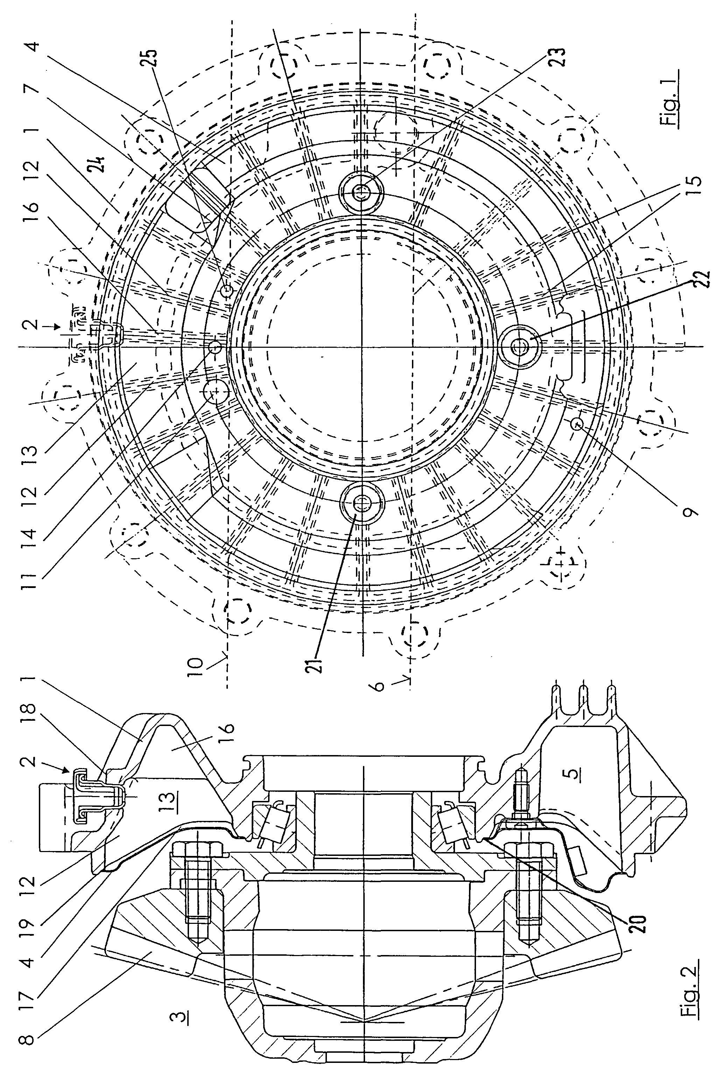

Gemäß den Fig. 1 und 2 ist ein Differentialdeckel 1 eines in einem nicht näher dargestellten Getriebe integrierten Differentiales mit einer daran angeordneten Entlüftungseinrichtung 2 dargestellt. Zwischen einem Differentialradraum 3 und dem Differentialdeckel 1 ist ein Ölstaublech 4 angeordnet. Der Differentialdeckel 1 und das Ölstaublech 4, welche als eine den Durchmesser des Differentialdeckels 1 einnehmende Trennwand zwischen dem Differentialradraum 3 und dem Differentialdeckel 1 ausgebildet ist, begrenzt einen Ölreservoirraum 5. Darüber hinaus sind in dem Ölstaublech 4 Durchlaßöffnungen für das Differentialöl vorgesehen.

Wie in Fig. 1 ersichtlich, ist in dem Ölstaublech 4 im Bereich oberhalb eines Ölpegels 6 des Differentialradraumes 3 eine Öleintrittsöffnung 7 vorgesehen. Durch hohe Temperaturen in dem Differentialradraum 3 und hohe Drehzahlen eines in Fig. 2 dargestellten Differentialrades 8, welches bei Rotation wie ein Schöpfrad wirkt, gelangt Luft und Spritzöl aus dem Differentialradraum 3 heraus durch die Öleintrittsöffnung 7 in den Ölreservoirraum 5. Das in den Ölreservoirraum 5 eingetretene Luft/Öl-Gemisch separiert sich, wobei die Luft durch die Entlüftungseinrichtung 2 aus dem Differentialdeckel 1 austritt und sich das Differentialöl am Boden des Ölreservoirraumes 5 absetzt.

Damit im Fahrbetrieb der Austritt des Differentialöles aus dem Differentialradraum 3 den Ölpegel 6 in diesem nicht unter einen Minimalwert absinken läßt, ist an der der Entlüftungseinrichtung 2 gegenüberliegenden Seite des Ölstaubleches 4 eine Ölrückführöffnung 9 vorgesehen, durch welche Differentialöl aus dem Ölreservoirraum 5 in den Differentialradraum 3 zurückfließen kann.

Um zu verhindern, daß ein Ölpegel 10 des Ölreservoirraumes 5 einen Maximalwert übersteigt, ist unterhalb der Öleintrittsöffnung 7 eine Überlauföffnung 11 in dem Ölstaublech 4 vorgesehen, durch welche das Differentialöl ab einem definierten Maximalwert in den Differentialradraum 3 abfließt. Damit ist gewährleistet, daß der Ölpegel 10 in dem Ölreservoirraum 5 auf keinen Fall derart ansteigt, daß das Differentialöl durch die Öleintrittsöffnung 7 von dem Ölreservoirraum 5 in den Differentialradraum 3 zurückfließt. Damit wird vermieden, daß die bei Überdruck durch die Öleintrittsöffnung 7 aus dem Differentialradraum austretende Luft das rückströmende Differentialöl in der Öleintrittsöffnung 7 zerstäubt und durch die Entlüftungseinrichtung 2 in fein dispergierter Form in die Umgebung mitreißt.

Der Differentialdeckel 1 weist mehrere radial angeordnete Rippen 12, 15, 16 auf, welche in Fig. 1 gestrichelt dargestellt sind, da sie in der Draufsicht gemäß Fig. 1 von dem Ölstaublech 4 verdeckt sind. Zwei der Rippen sind beidseitig der Entlüftungseinrichtung 2 als Abschlußrippen 12 eines Entlüftungsraumes 13 angeordnet. Die beiden Abschlußrippen 12 haben die Aufgabe, die Entlüftungseinrichtung 2 vor Spritzöl und Ölschaum abzuschirmen und somit einen Austritt von Differentialöl aus dem Differentialdeckel 1 zu vermeiden.

Eine weitere entscheidende Maßnahme, um den Austritt des Differentialöles zu verhindern, ist die vorteilhafte Anordnung der Entlüftungseinrichtung 2 im Bereich des höchsten Punktes des Differentialdeckels 1. Des weiteren bewirkt die hohe Lage der Entlüftungseinrichtung 2 einen besseren Schutz gegen Spritzwasser.

Damit sich bei extremen Betriebszuständen des Getriebes, die beispielsweise bei Rückwärtsfahrten entstehen, der Entlüftungsraum 13 nicht mit Differentialöl anfüllt, ist in dem Ölstaublech 4 eine Entleerungsöffnung 14 vorgesehen. Durch diese wird das durch Rückströmung in den Entlüftungsraum 13 eingetragene Differentialöl in den Differentialradraum 3 zurückgeführt. Hierdurch wird verhindert, daß sich das Differentialöl in dem Entlüftungsraum 13 ansammelt und durch die Entlüftungseinrichtung 2 austreten kann.

Das Ölstaublech 4 und die Abschlußrippen 12 dienen als Hindernisse und Ölabscheider in den luftzuführenden Bereichen der Entlüftungseinrichtung 2. Andererseits aber müssen die Luft aus dem Differentialradraum 3 zu der Entlüftungseinrichtung 2 durchlassenden Querschnitte, welche die Öleintrittsöffnung 7 und ein zwischen den Rippen 12, 15, 16 und dem Ölstaublech 4 ausgebildeter Spalt 17 darstellen, genügend groß ausgebildet sein, um keinen zu großen Staudruck aufzubauen. Aus diesem Grund wird die ausströmende Luft immer Differentialöl in den Entlüftungsraum 13 eintragen, welche jedoch über die Entleerungsöffnung 14 wieder austreten kann.

Zur Versteifung des Differentialdeckels 1 sind mehrere der radial angeordneten Rippen als Versteifungsrippen 15 ausgebildet. Eine zwischen den Abschlußrippen 12 angeordnete Entlüftungsraumrippe 16 ist auf ihrer dem Ölstaublech 4 zugewandten Seite derart verkürzt, daß die Entlüftungseinrichtung 2 zwischen der Entlüftungsraumrippe 16 und dem Ölstaublech 4 in einer Außenwand 18 des Differentialdekkels 1 anbringbar ist.

An dem Differentialdeckel 1 sind weiterhin zwei plane Flächen vorgesehen, welche als Auflageflächen 19, 20 für das Ölstaublech 4 vorgesehen sind. Um Vibrationen des Ölstaubleches 4 während des Betriebes des Getriebes zu vermeiden, ist zusätzlich die Möglichkeit vorgesehen, dieses zu verschrauben, Bezugszeichen 21 bis 23.

Die Entlüftungseinrichtung 2 selbst ist bei dem in Fig. 1 und 2 dargestellten Ausführungsbeispiel als ein ATF (Automatic Transmission Fluid)- Entlüfter 2 ausgebildet.

Generell ist mit der beschriebenen Entlüfterpositionierung die Verwendung einfacher Entlüfter ohne Ventil möglich, da durch die gezielte Abschottung des Entlüfters 2 und eine geführte Ölströmung hinter dem Ölstaublech 4 dessen Funktion auch bei einer einfachen Lüftergestaltung selbst unter kritischen Bedingungen sichergestellt ist.

### Bezugszeichen

- 1: Differentialdeckel
- 2: Entlüftungseinrichtung
- 3: Differentialradraum
- 4: Ölstaublech
- 5: Ölreservoirraum
- 6: Ölpegel
- 7: Öleintrittsöffnung
- 8: Differentialrad
- 9: Ölrückführöffnung
- 10: Ölpegel
- 11: Überlauföffnung
- 12: Abschlußrippen
- 13: Entlüftungsraum
- 14: Entleerungsöffnung
- 15: Versteifungsrippen
- 16: Entlüftungsraumrippe
- 17: Spalt
- 18: Außenwand des Differentialdeckels
- 19: Auflagefläche
- 20: Auflagefläche
- 21: Befestigungsöffnung
- 22: Befestigungsöffnung
- 23: Befestigungsöffnung
- 24: Vorkammer
- 25: Entleeröffnung

## Patentansprüche

1. Getriebe, welches ein integriertes Differential mit einem vom Getriebeölkreislauf separaten Differentialölkreislauf in einem Differentialraum (3), der von einem Differentialgehäuse und einem daran befestigten Differentialdekkel (1) begrenzt ist und mit einer Entlüftungseinrichtung (2) ausgestattet ist, aufweist, wobei zwischen dem Differentialgehäuse und dem Differentialdeckel ein Ölstaublech (4) angeordnet ist, dadurch **gekennzeichnet**, daß die Entlüftungseinrichtung (2) an dem Differentialdeckel (1) angeordnet ist und das Ölstaublech (4) als eine den Durchmesser des Differentialdeckels (1) einnehmende Trennwand zwischen einem Differentialradraum (3) und einem Ölreservoirraum (5) ausgebildet ist, wobei in dem Ölstaublech (4) Durchlaßöffnungen (7, 9, 11, 14) für das Differentialöl vorgesehen sind.

2. Getriebe nach Anspruch 1, dadurch **gekennzeichnet,** daß die Entlüftungseinrichtung (2) im Bereich des höchsten Punktes des Differentialdeckels (1) angeordnet ist.

3. Getriebe nach Anspruch 1 oder 2, dadurch **gekennzeichnet,** daß der Differentialdeckel (1) mit mehreren radial angeordneten Rippen (12, 15, 16) ausgebildet ist.

4. Getriebe nach Anspruch 3, dadurch **gekennzeichnet,** daß zwei beidseitig der Entlüftungseinrichtung (2) angeordnete Rippen als Abschlußrippen (12) eines Entlüftungsraumes (13) derart ausgebildet sind, daß die darin angeordnete Entlüftungseinrichtung (2) vor Spritzöl und Ölschaum abschirmbar ist.

5. Getriebe nach Anspruch 4, dadurch **gekennzeichnet,** daß in dem Entlüftungsraum (13) eine Entlüftungsraumrippe (16) ausgebildet ist, welche auf ihrer dem Ölstaublech (4) zugewandten Seite zur Aufnahme der Entlüftungseinrichtung (2) verkürzt ist.

6. Getriebe nach Anspruch 5, dadurch **gekennzeichnet,** daß die Entlüftungseinrichtung (2) zwischen der Entlüftungsraumrippe (16) und dem Ölstaublech (4) in einer Außenwand (18) des Differentialdeckels (1) angeordnet ist.

7. Getriebe nach einem der Ansprüche 3 bis 6, dadurch **gekennzeichnet**, daß alle Rippen als Versteifungsrippen (15) vorgesehen sind.

8. Getriebe nach einem der Ansprüche 1 bis 7, dadurch **gekennzeichnet**, daß an dem Differentialdekkel (1) Auflageflächen (19, 20) für das Ölstaublech (4) vorgesehen sind.

9. Getriebe nach einem der Ansprüche 3 bis 8, dadurch **gekennzeichnet**, daß die Auflageflächen mit Augen zur Verschraubung an den Rippen (21, 22, 23) ausgebildet sind.

10. Getriebe nach einem der Ansprüche 1 bis 9, dadurch **gekennzeichnet**, daß wenigstens eine der Durchlaßöffnungen in dem Ölstaublech (4) als Öleintrittsöffnung (7) im Bereich oberhalb einem in dem Differentialradraum (3) befindlichen Ölpegel (6) ausgebildet ist.

11. Getriebe nach einem der Ansprüche 1 bis 10, dadurch **gekennzeichnet**, daß wenigstens eine Durchlaßöffnung in dem Ölstaublech (4) im Bereich eines in dem Ölreservoirraum (5) befindlichen Ölpegels (10) als Überlauföffnung (11) zur Begrenzung eines maximalen Ölpegels in dem Ölreservoirraum (5) angeordnet ist.

12. Getriebe nach Anspruch 11, dadurch **gekennzeichnet,** daß wenigstens eine Durchlaßöffnung in dem Ölstaublech (4) unterhalb der Überlauföffnung (11) als Ölrückführöffnung (9) ausgebildet ist, durch welche Differentialöl aus dem Ölreservoirraum (5) in den Differentialradraum (3) rückführbar ist.

13. Getriebe nach einem der Ansprüche 1 bis 12, dadurch **gekennzeichnet**, daß wenigstens eine Durchlaßöffnung in dem Ölstaublech (4) als Entleerungsöffnung (14) ausgebildet ist, die zur Abführung von Differentialöl aus dem Entlüftungsraum (13) in den Differentialradraum (3) vorgesehen ist.

14. Getriebe nach einem der Ansprüche 1 bis 13, dadurch **gekennzeichnet**, daß die Entlüftungseinrichtung als Automatic Transmission Fluid-Entlüfter (2) ausgebildet ist.

15. Getriebe nach einem der vorausgegangenen Ansprüche, dadurch **gekennzeichnet**, daß wenigstens eine Durchlaßöffnung in dem Ölstaublech (4) als Entleeröffnung (25) aus der Vorkammer (24) in den Differentialradraum (3) vorgesehen ist.

## Claims

1. A transmission, which has an integrated differential having a differential oil circuit which is separate from the oil circuit for the transmission in a differential space (3) which is delimited by a differential housing and a differential cover (1) fixed to this latter and is equipped with a ventilation device (2), an oil baffle plate (4) being arranged between the differential housing and the differential cover, characterised in that the ventilation device (2) is arranged on the differential cover (1), and the oil baffle plate (4) is constructed between a differential gear space (3) and an oil reservoir space (5) as a partition wall having the diameter of the differential cover (1), ports (7, 9, 11, 14) for the differential oil being provided in the oil baffle plate (4).

2. A transmission according to Claim 1, characterised in that the ventilation device (2) is arranged in the area of the highest point of the differential cover (1).

3. A transmission according to Claim 1 or 2, characterised in that the differential cover (1) is constructed to have a plurality of radially arranged ribs (12, 15, 16).

4. A transmission according to Claim 3, characterised in that two ribs arranged one on each side of the ventilation device (2) are constructed as cover ribs (12) of a ventilating space (13), such that the ventilation device (2) arranged therein may be shielded from oil splash and oil froth.

5. A transmission according to Claim 4, characterised in that a ventilation-space rib (16) is constructed in the ventilation space (13) and is foreshortened at its side facing the oil baffle plate (4) to enable installation of the ventilation device (2).

6. A transmission according to Claim 5, characterised in that the ventilation device (2) is arranged between the ventilation-space rib (16) and the oil baffle plate (4) in an outer wall (18) of the differential cover (1).

7. A transmission according to one of Claims 3 to 6, characterised in that all of the ribs are provided as reinforcing ribs (15).

8. A transmission according to one of Claims 1 to 7, characterised in that supporting faces (19, 20) for the oil baffle plate (4) are provided on the differential cover (1).

9. A transmission according to one of Claims 3 to 8, characterised in that the supporting faces are constructed to have eyes (21, 22, 23) for enabling them to be bolted to the ribs.

10. A transmission according to one of Claims 1 to 9, characterised in that at least one of the ports in the oil baffle plate (4) is constructed as an oil intake opening (17) in the area above an oil level (6) in the differential gear space (3).

11. A transmission according to one of Claims 1 to 10, characterised in that at least one port in the oil baffle plate (4) is arranged as an overflow opening (11) in the area of an oil level (10) in the oil reservoir space (5) for the purpose of limiting a maximum oil level in the oil reservoir space (5).

12. A transmission according to Claim 11, characterised in that at least one port in the oil baffle plate (4) is constructed below the overflow opening (11) as an oil return opening (9) through which differential oil from the oil reservoir space (5) may be returned to the differential gear space (3).

13. A transmission according to one of Claims 1 to 12, characterised in that at least one port in the oil baffle plate (4) is constructed as a discharge opening (14), which is provided for conducting differential oil from the ventilation space (13) into the differential gear space (3).

14. A transmission according to one of Claims 1 to 13, characterised in that the ventilation device is constructed as an automatic transmission fluid ventilator (2).

15. A transmission according to one of the preceding claims, characterised in that at least one port in the oil baffle plate (4) is provided as a discharge opening (25) from the pre-combustion chamber (24) to the differential gear space (3).

## Revendications

1. Transmission qui comprend un différentiel intégré possédant un circuit d'huile de différentiel séparé du circuit d'huile de la transmission, prévu dans une chambre (3) du différentiel qui est limitée par un carter de différentiel et par un couvercle (1) du différentiel fixé à ce carter et qui est équipée d'un dispositif de purge d'air (2), dans laquelle une plaque de retenue d'huile (4) est disposée entre le carter de différentiel et le couvercle de différentiel, **caractérisée** en ce que le dispositif de purge d'air (2) est agencé sur le couvercle (1) du différentiel et la plaque de retenue d'huile (4) est constituée par une cloison ayant le diamètre du couvercle (1) du différentiel, qui est placée entre une chambre (3) des roues du différentiel et une chambre réservoir d'huile (5), des ouvertures de passage (7, 9, 11, 14) pour l'huile du différentiel étant prévues dans la plaque de retenue d'huile (4).

2. Transmission selon la revendication 1, **caractérisée** en ce que le dispositif de purge d'air (2) est disposé dans la région du point le plus haut du couvercle (1) du différentiel.

3. Transmission selon la revendication 1 ou 2, **caractérisée** en ce que le couvercle (1) du différentiel est réalisé avec plusieurs nervures (12, 15, 16) disposées radialement.

4. Transmission selon la revendication 3, **caractérisée** en ce que deux nervures disposées de part et d'autre du dispositif de purge d'air (2) constituent des nervures de fermeture (12) d'une chambre de purge d'air (13) afin que le dispositif de purge d'air (2) disposé dans cette chambre puisse être abrité des projections d'huile et de l'écume d'huile.

5. Transmission selon la revendication 4, **caractérisée** en ce que, dans la chambre de purge d'air (13), est ménagée une nervure (16) de chambre de purge d'air qui est raccourcie sur son côté dirigé vers la plaque de retenue d'huile (4) afin de recevoir le dispositif de purge d'air (2).

6. Transmission selon la revendication 5, **caractérisée** en ce que le dispositif de purge d'air (2) est disposé entre la nervure (16) de chambre de purge d'air et la plaque de retenue d'huile (4), dans une paroi extérieure (18) du couvercle (1) du différentiel.

7. Transmission selon l'une des revendications 3 à 6, **caractérisée** en ce que toutes les nervures sont prévues en qualité de nervures de raidissement (15).

8. Transmission selon l'une des revendications 1 à 7, **caractérisée** en ce que, sur le couvercle (1) du différentiel sont prévues des surfaces de portée (19, 20) pour la plaque de retenue d'huile (4).

9. Transmission selon l'une des revendications 3 à 8, **caractérisée** en ce que les surfaces de portée sont pourvues d'oeillets pour le boulonnage sur les nervures (21, 22 23).

10. Transmission selon l'une des revendications 1 à 9, **caractérisée** en ce qu'au moins une des ouvertures de passage ménagées dans la plaque de retenue d'huile (4) constitue une ouverture d'entrée d'huile (7) dans la région située au-dessus d'un niveau d'huile (6) qui se trouve dans la chambre (3) des roues du différentiel.

11. Transmission selon l'une des revendications 1 à 10, **caractérisée** en ce qu'au moins une ouverture de passage ménagée dans la plaque de retenue d'huile (4) est disposée dans la région d'un niveau d'huile (10) qui se trouve dans la chambre réservoir d'huile (5), en qualité d'ouverture de trop-plein (11) pour limiter un niveau d'huile maximum dans la chambre réservoir d'huile (5).

12. Transmission selon la revendication 11, **caractérisée** en ce qu'au moins une ouverture de passage ménagée dans la plaque de retenue d'huile (4) est formée au-dessous de l'ouverture de trop-plein (11) pour constituer une ouverture de retour d'huile (9) à travers laquelle l'huile du différentiel peut être renvoyée de la chambre réservoir d'huile (5) dans la chambre (3) des roues du différentiel.

13. Transmission selon l'une des revendications 1 à 12,**caractérisée** en ce qu'au moins une ouverture de passage ménagée dans la plaque de retenue d'huile (4) est constituée par une ouverture de vidange (14) qui est prévue pour vider l'huile du différentiel de la chambre de purge d'air (13) dans la chambre (3) des roues du différentiel.

14. Transmission selon l'une des revendications 1 à 13, **caractérisée** en ce que le dispositif de purge d'air est constitué par une purge d'air (2) de fluide de transmission automatique.

15. Transmission selon l'une des revendications précédentes, **caractérisée** en ce qu'au moins une ouverture de passage ménagée dans la plaque de retenue d'huile (4) est prévue comme ouverture de vidange (25) menant de la préchambre (24) à la chambre (3) des roues du différentiel.
